# EUROPÄISCHE PATENTSCHRIFT

(11) **EP 3 158 288 B1**
(45) Veröffentlichungstag und Bekanntmachung des Hinweises auf die Patenterteilung: **04.04.2018**
(21) Anmeldenummer: 15744856.4
(22) Anmeldetag: 23.06.2015
(51) Int. Cl.: G01B 11/26, B21D 5/02

(54) **BIEGEWINKELMESSVORRICHTUNG FÜR EINE BIEGEPRESSE**
BENDING ANGLE MEASURING DEVICE FOR A BENDING PRESS
DISPOSITIF DE MESURE D'ANGLES DE PLIAGE DESTINÉ À UNE PRESSE DE PLIAGE

(30) Priorität: 23.06.2014 AT 504342014
(43) Veröffentlichungstag der Anmeldung: 26.04.2017
(73) Patentinhaber: TRUMPF Maschinen Austria GmbH & Co. KG., 4061 Pasching (AT)
(72) Erfinder: ANGERER, Gerhard, 4203 Altenberg (AT); FREUDENTHALER, Klemens, 4020 Linz (AT); GAGGL, Josef, 4400 Steyr (AT); HÖRL, Matthias, 4020 Linz (AT); STRASSER, Hagen, 4061 Pasching (AT); THEIS, Helmut, 4540 Pfarrkirchen (AT); WALDHERR, Manfred, 4040 Linz (AT); WEISS, Thomas, 4020 Linz (AT)
(74) Vertreter: Burger, Hannes
(86) Internationale Anmeldenummer: PCT/AT2015/050155
(87) Internationale Veröffentlichungsnummer: WO 2015/196224

(56) Entgegenhaltungen:
- EP-A1- 2 660 559
- EP-A1- 2 719 475
- EP-A2- 1 961 502
- DE-U1-202010 006 391
- NL-C2- 1 002 314

## Beschreibung

Die Erfindung betrifft eine Biegewinkelmessvorrichtung für eine Biegepresse gemäß dem Oberbegriff des Anspruchs 1 sowie ein Verfahren zur Bestimmung des Biegewinkels eines Blechteils unter Verwendung einer solchen Biegewinkelmessvorrichtung gemäss dem Oberbegriff des Anspruchs 14 bzw. gemäß dem Oberbegriff des Anspruchs 15. Beim Biegen von Blechteilen besteht eine große Herausforderung darin, den gewünschten Biegewinkel längs des zu biegenden Werkstücks konstant einzuhalten. Der Biegedruck mit dem die Biegepresse das Oberwerkzeug gegen den zu biegende Blechteil und folglich in das Unterwerkzeug drückt, hängt im Wesentlichen von den Materialeigenschaften des umzuformenden Werkstück ab. Aufgrund von Schwankungen der Materialparameter des umzuformenden Blechteils, insbesondere der Blechdicke, wird der nach dem Modell ermittelte Pressendruck, gegebenenfalls für die aktuell durchzuführende Biegeumformung nicht korrekt sein und sich somit ein abweichender Biegewinkel einstellen.
Es ist daher von Vorteil, wenn der aktuell erreichte Biegewinkel bereits während der Durchführung der Biegeumformung ermittelt werden kann und somit direkt für die Steuerung des Biegevorganges herangezogen werden kann.
Aus der DE 20 2010 006 391 U1 ist eine Winkelmessvorrichtung für Abkantpressen bekannt, bei der in einem seitlichen Abstand zur Längserstreckung des Biegewerkzeug ein optisches und vorzugsweise lasergestütztes Biegewinkelmessgerät angeordnet ist. Der seitliche Abstand zum Werkzeug ist veränderbar, sodass das Biegewinkelmessgerät seinen Abstand zum Werkzeug und damit den Abstand zur Blechoberfläche ändern kann. Für jede Matrizenbreite, also für jedes verwendete Werkzeug, wird eine eigene Kalibrierkurve benötigt. Diese Kalibrierkurve legt die Zuordnung der Winkel des erfassten Laserstrichs, zum Ist-Winkel des Blechs fest. Diese Kalibrierung erfolgt über ein externes Kalibriergerät. Die Aktivierung der jeweiligen Kalibrierkurve erfolgt durch Übergabe der verwendeten Matrize bzw. des Werkzeugs aus der Maschinensoftware an die Winkelmesssoftware.
Blechoberflächen haben bei optisch wirkenden Messverfahren den Nachteil, dass der Reflexionsgrad einer Blechoberfläche stark schwanken kann, sodass ein optisches Messverfahren, welches auf statischen Reflexionswerten beruht, gegebenenfalls einen falschen Biegewinkel ermitteln kann.

Der Stand der Technik offenbart diesbezüglich einen Kalibriervorgang, der von einer externen Vorrichtung durchgeführt wird und dann anschließend für alle mit dieser Werkzeugkombination durchgeführten Biegungen gilt. Somit besteht auch hier die Gefahr einer Falschbiegung aufgrund sich ändernder Reflexionswerte der Blechoberfläche.

Das gattungsbildende NL 1 002 314 beschreibt eine Winkelmessvorrichtung für eine Biegepresse, bei der der Biegewinkel eines zu verformenden Blechteiles durch optische Abtastung der Oberfläche gemessen wird. Dabei ist eine Beleuchtungsvorrichtung gemeinsam mit mehreren Sensoren an einem schwenkbaren Messkopf angeordnet. Der Messkopf wird derart ausgerichtet, dass ein Laserlichtstrahl der Beleuchtungsvorrichtung auf ein freies Ende des umzuformenden Blechteils hin ausgerichtet ist. Gleichzeitig führt der Messkopf hin und her pendelnde Schwenkbewegungen aus, währenddessen die von den verschiedenen Sensoren empfangenen Strahlungsintensitäten des von dem Blechteil reflektierten Lichts gemeinsam mit der jeweiligen Winkelposition des Messkopfs aufgezeichnet werden. Aus den unterschiedlichen von den Sensoren aufgezeichneten Intensitätsverläufen über den momentanen Winkel des Messkopfes lässt sich der Biegewinkel des umzuformenden Blechteils berechnen.
Es ist daher Aufgabe der Erfindung eine optisch wirkende Biegewinkelmessvorrichtung für eine Biegepresse zu schaffen, welche eine Bestimmung des Biegewinkels währen der Durchführung der Biegeumformung ermöglicht, wobei die spezifischen Reflexionseigenschaften des individuellen Blechteils das Messergebnis nicht beeinflussen.
Die Aufgabe der Erfindung wird gelöst durch eine Biegewinkel-Messvorrichtung für eine Biegepresse mit den Merkmalen des Anspruchs 1, wobei ein zu biegendes Blechteil zwischen einem Unter- und einem Oberwerkzeug eines Biegewerkzeugs der Biegepresse angeordnet ist. Die Biegewinkel-Messvorrichtung weist eine Beleuchtungs- und Detektionsvorrichtung auf, welche so an einer Verschwenkvorrichtung angeordnet sind, dass die Beleuchtungs- und Detektionsvorrichtung in einem Normalabstand zu einer Oberfläche des Blechteils angeordnet ist. Die Beleuchtungsvorrichtung gibt einen ersten Lichtstrahl auf einen Oberflächenabschnitt des Blechteils ab, welcher erste Lichtstrahl unter einem spitzen Einfallswinkel auf die Blechoberfläche trifft, wobei der Einfallswinkel zwischen Blechoberfläche und einfallendem Lichtstrahl definiert ist. Ferner erfasst die über ein Auswertemodul mit einer Maschinensteuerung verbundene Detektionsvorrichtung, einen vom Oberflächenabschnitt reflektierten Lichtstrahl. Die Verschwenkvorrichtung ist zwischen einer Kalibrier- und einer Messposition verschwenkbar ausgebildet, wobei der Einfallswinkel und der Normalabstand in der Kalibrier- und Messposition gleich ist.

Durch die Verschwenkbarkeit ist eine genaue Bestimmung des Biegewinkels für jeden einzelnen Blechteil möglich, da jeweils eine Kalibrierung der Messvorrichtung auf die tatsächlichen Reflexionsverhältnisse des eingelegten Blechteils möglich ist.

Unter einem Lichtstrahl ist eine gerichtete Abgabe von Licht zu verstehen. Dies bedeutet, dass der Hauptanteil des von der Beleuchtungsvorrichtung abgegebenen Lichts, in Richtung des Oberflächenabschnitts des Blechteils gelenkt wird. Dazu kann die Beleuchtungsvorrichtung gegebenenfalls eine Strahlformungs- und/oder Ablenkvorrichtung aufweisen.

Gemäß einer Weiterbildung ist die Beleuchtungsvorrichtung als Punktstrahler und/oder die Detektionsvorrichtung als Bildsensor ausgebildet. Ein Punktstrahler gibt das gesamte Licht in einen kleinen, gegebenenfalls begrenzten, Raumwinkel ab. Beispielsweise kann die Beleuchtungsvorrichtung durch eine LED gebildet sein. Es ist auch eine Ausbildung als Laser möglich, wobei ggf. eine Aufweitungsoptik vorhanden ist.

Von Vorteil ist eine Weiterbildung, nach der die Verschwenkvorrichtung ein Antriebsmittel aufweist, welches mit der Maschinensteuerung verbunden ist. Mit dieser Weiterbildung wird gewährleistet, dass die Verschwenkung automatisch, insbesondere ohne Zutun des Bedieners durchgeführt wird. Da die Maschinensteuerung insbesondere die Bewegung des Ober- und/oder Unterwerkzeugs steuert bzw. kontrolliert, lässt sich sicherstellen, dass die Biegung nur dann ausgelöst bzw. durchgeführt wird, wenn ein Kalibriervorgang durchgeführt wurde. Mit dieser Weiterbildung ist es ferner möglich, dass der Kalibriervorgang periodisch ausgeführt wird, bspw. nach jeden x-ten Biegevorgang. Dies ist insbesondere dann von Vorteil, wenn Bleche mit weitestgehend homogenen Oberflächenqualitäten verarbeitet werden.

Gemäß einer Weiterbildung ist vorgesehen, dass die Verschwenkvorrichtung im Bereich des Unter- oder des Oberwerkzeugs angeordnet ist. Eine Anordnung im Bereich des Unterwerkzeugs hat den Vorteil, dass die Verschwenkvorrichtung und damit die daran angeordnete Beleuchtungs- und Detektionsvorrichtung, durch das eingelegte Blech abgeschattet wird, wodurch weniger Streulicht aus der Umgebung auf die Detektionsvorrichtung gelangt. Bei einer Biegepresse wird zumeist das Oberwerkzeug relativ zum feststehenden Unterwerkzeug bewegt. Daher hat eine Anordnung der Verschwenkvorrichtung im Bereich des Oberwerkzeugs den Vorteil, dass diese durch das hochfahrende Oberwerkzeug aus dem Arbeitsbereich und damit aus einem Bereich erhöhter Beschädigungsgefahr bewegt wird.

Gemäß einer Weiterbildung ist in der Draufsicht, die Bewegungsbahn der Verschwenkvorrichtung zwischen der Kalibrier- und der Messposition, eine Kreisbahn. Dies ermöglicht eine sehr einfache Konstruktion der Verschwenkvorrichtung mit einem, um einen Drehpunkt verschwenkbaren Ausleger. Der Drehpunkt ist dabei durch den Kontaktpunkt des Blechs mit der Biegekante bzw. dem Biegeradius des Unterwerkzeugs, genauer durch den Kantenradiusmittelpunkt des Unterwerkzeugs, gebildet, um welchen Kontaktpunkt das Blech während der Biegung aufschwenken wird.

Eine Weiterbildung zeichnet sich dadurch aus, dass der Winkel zwischen den Normalabständen in der Kalibrier- und in der Messposition, gleich dem halben Biegewinkel ist.

Von Vorteil ist ferner eine Weiterbildung, nach der die Beleuchtungsvorrichtung einen Modulator aufweist, mit dem der erste Lichtstrahl in seiner Intensität modulierbar ist. Die Werkzeugmaschine wird in einer Produktionshalle aufgestellt sein, wo eine den Arbeitsanforderungen entsprechende Beleuchtungsstärke herrschen wird. Ein Umgebungslicht könnte jedoch die Bestimmung des reflektierten Anteils beeinflussen. Ist das von der Beleuchtungsvorrichtung ausgesandte Licht in seiner Intensität moduliert, kann aus der daraus folgenden definierten Helligkeitsschwankung des reflektierten Anteils, der vom Umgebungslicht unabhängige, tatsächlich reflektierte Anteil bestimmt werden. Beispielsweise kann die Intensität des ersten Lichtstrahls um einen Mittelwert oszillieren, sodass durch einfache Mittelwertbildung des reflektierten Anteils, der Einfluss der Umgebungshelligkeit weitestgehend verschwindet.

Nach einer Weiterbildung ist auch vorgesehen, dass die Detektionsvorrichtung oder die Maschinensteuerung einen Korrelator aufweist. Um eine bessere Unterdrückung des Umgebungslichts zu erreichen, kann die Intensität des ersten Lichtstrahls bspw. einen komplexen Intensitätsverlauf aufweisen. Ein Korrelator hat das Intensitätsmuster hinterlegt bzw. ist mit der Beleuchtungsvorrichtung gekoppelt und kann somit das ausgesandte Intensitätsmuster im erfassten reflektierten Licht erkennen. Dies ist insbesondere auch dann möglich, wenn die Intensität des erfassten reflektierten Licht klein gegenüber dem Umgebungslicht ist. Mit dieser Weiterbildung wird eine Steigerung der Erkennungssicherheit des reflektierten Anteils erreicht.

Ferner ist gemäß einer Weiterbildung vorgesehen, dass der erste Lichtstrahl eine strukturierte Helligkeitsverteilung aufweist. Die Struktur kann bspw. ein Gitter- oder ein Linienmuster sein. Von Vorteil dieser Weiterbildung ist, dass sich dadurch Einflüsse durch das Umgebungslicht reduzieren lassen.

Nach einer Weiterbildung ist auch vorgesehen, dass die Detektionsvorrichtung eine gerichtete Empfindlichkeitscharakteristik aufweist. Auch diese Weiterbildung zielt darauf hin ab, den Einfluss des Umgebungslichts auf die Erfassung der Intensität des reflektierten Lichts zu verringern. Durch eine gerichtete Empfindlichkeitscharakteristik ist gewährleistet, dass nur bzw. überwiegend Licht aus dem beleuchteten Oberflächenabschnitt zur Erfassung gelangt. Die Richtwirkung kann bspw. mittels einer Optik, einer Blendenanordnung, oder einer Abschattungsvorrichtung erreicht werden, wobei diese Aufzählung nicht abschließend zu sehen ist. Umgebungslicht wird im Spektralbereich zumeist eher breitbandig sein, bzw. wird es keine, oder wenige dominante Spektralkomponenten geben. Weist der erste Lichtstrahl eine spezifische spektrale Verteilung auf, wird insbesondere zumindest eine Spektralkomponente dominieren, kann die Detektionsvorrichtung dahingehend ausgebildet sein, auf diese Verteilung bzw. die dominante Spektralkomponente sensibilisiert zu sein. Daher ist eine Weiterbildung auch dadurch gekennzeichnet, dass die Detektionsvorrichtung ein Empfindlichkeitsmaximum im Spektralbereich des ersten Lichtstrahls aufweist. Mit dieser Weiterbildung wird ebenfalls eine Unterdrückung des Umgebungslichts erreicht.
Die Aufgabe der Erfindung wird auch durch ein Verfahren zur Bestimmung des Biegewinkels eines Blechteils während der Durchführung der Biegeumformung mit den Schritten des Anspruchs 14 bzw. des Anspruchs 15 gelöst, bei welchem eine gegenständliche Biegewinkel-Messvorrichtung zur Anwendung kommt. Das umzuformende Blechteil wird im Biegewerkzeug, insbesondere zwischen dem Unter- und Oberwerkzeug, eingelegt und die Biegeumformung durch ein aufeinander Zubewegen des Ober- und Unterwerkzeugs durchgeführt.
Insbesondere wird nach Einlegen des zu biegenden Blechteils und vor Durchführung der Biegeumformung, die Beleuchtungs- und Detektionsvorrichtung von der Verschwenkvorrichtung in die Kalibrierposition verschwenkt und dann von der Beleuchtungsvorrichtung ein erster Lichtstrahl auf einen Oberflächenabschnitt des Blechteils abgegeben. Der vom Oberflächenabschnitt reflektierte Lichtstrahl wird von der Detektionsvorrichtung aufgenommen und die erfasste Intensität vom Auswertemodul als Soll-Intensität bestimmt.
Danach wird die Beleuchtungs- und Detektionsvorrichtung von der Verschwenkvorrichtung in die Messposition verschwenkt und von der Maschinensteuerung die aufeinander Zubewegung des Ober- und Unterwerkzeugs ausgelöst. Währenddessen wird der vom Oberflächenabschnitt reflektierte Lichtstrahl von der Detektionsvorrichtung aufgenommen und die erfasste Intensität vom Auswertemodul als Ist-Intensität bestimmt. Ferner wird vom Auswertemodul oder der Maschinensteuerung ein Vergleich der Ist- mit der Soll-Intensität durchgeführt und bei einer Übereinstimmung der Ist-Intensität mit der Soll-Intensität, das aufeinander Zubewegen des Ober- und Unterwerkzeugs von der Maschinensteuerung gestoppt.

Der Vorteil dieses Verfahrens liegt insbesondere darin, dass es möglich ist, die Messvorrichtung für jeden Biegevorgang auf die aktuellen Oberflächeneigenschaften des zu biegenden Bleches anzupassen. Somit ist gewährleistet, dass stets eine korrekte Erfassung des Biegewinkels möglich ist, unabhängig von realen Schwankungen der Oberflächenbeschaffenheit des zu biegenden Bleches.

Zum besseren Verständnis der Erfindung wird diese anhand der nachfolgenden Figuren näher erläutert.

Es zeigen jeweils in stark vereinfachter, schematischer Darstellung:
- Fig. 1: eine Prinzipdarstellung der gegenständlichen Biegewinkel-Messvorrichtung;
- Fig. 2: a) die gegenständliche Biegewinkel-Messvorrichtung in der Kalibrierposition; b) die gegenständliche Biegewinkel-Messvorrichtung in der Messposition.

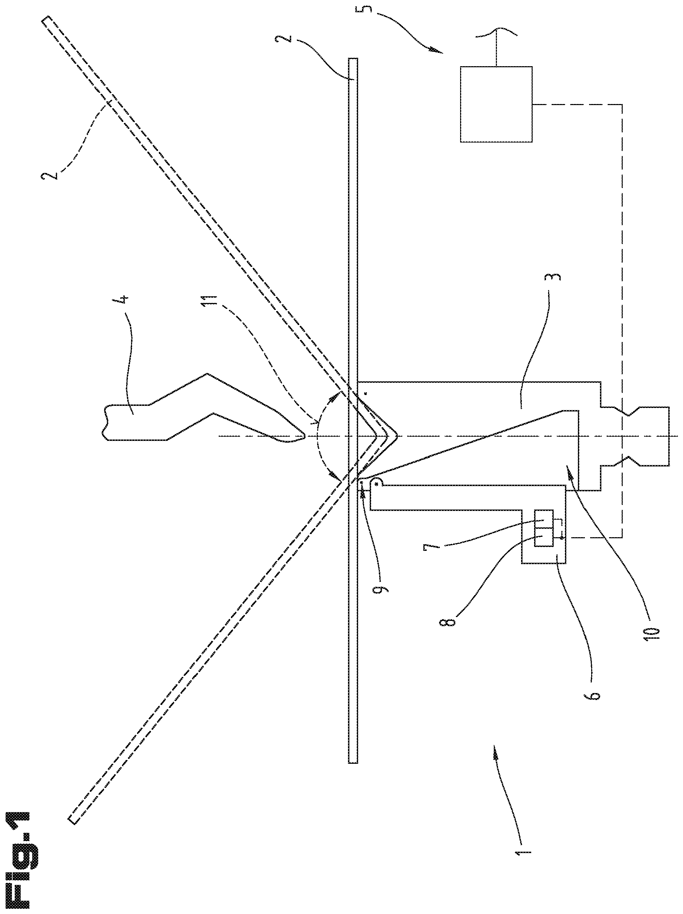

Fig. 1 zeigt eine gegenständliche Biegewinkel-Messvorrichtung 1 für eine Biegepresse, wobei ein zu biegendes Blechteil 2 zwischen einem Unter- 3 und einem Oberwerkzeug 4 eines Biegewerkzeugs der Biegepresse angeordnet ist. Ein Biegewerkzeug einer Biegepresse umfasst das Unterwerkzeug 3, bekannt auch als Biegegesenk, und ein Oberwerkzeug 4, bekannt auch als Biegestempel. Ober- 4 und Unterwerkzeug 3 sind hinsichtlich ihrer geometrischen Abmessungen und mechanischer Eigenschaften aufeinander abgestimmt, sodass sich mit einer Biegewerkzeuganordnung eine bestimmte Variation an Biegewinkel ausbilden lässt. Zur Vereinfachung der Darstellung sind in Fig. 1 und den folgenden Figuren die Halterung des Biegewerkzeugs und weitere Komponenten der Biegemaschine, insbesondere jene zur Bewegung des Biegewerkzeuges, nicht dargestellt. Dem Fachmann ist insbesondere klar, dass das Unterwerkzeug 3 in einem Pressentisch und das Oberwerkzeug 4 in einem Pressenbalken angeordnet sein wird, wobei Ober- 4 und Unterwerkzeug 3 relativ zueinander bewegbar sind, insbesondere wird sich das Oberwerkzeug 4 relativ zum feststehenden Pressentisch bewegen können. Die Relativbewegung des Biegewerkzeugs wird von einer Maschinensteuerung 5, insbesondere unter Einhaltung von sicherheitsrelevanten Parametern gesteuert. Die Maschinensteuerung 5 ist in Fig. 1 und den folgenden Figuren aus den oben genannten Gründen stark schematisiert dargestellt, insbesondere sind alle Mittel weggelassen, die zur Relativbewegung des Biegewerkzeugs und Erfassung und Einhaltung sicherheitsrelevanter Erfordernisse vorhanden sind.

Nach der in Fig. 1 dargestellten Ausführung ist an einer Verschwenkvorrichtung 6 eine Beleuchtungsvorrichtung 7 und eine Detektionsvorrichtung 8 angeordnet. Die Beleuchtungs- 7 und Detektionsvorrichtung 8 sind mit der Maschinensteuerung 5 verbunden, sodass der Biegevorgang bei Erreichen des gewünschten Biegewinkels gestoppt wird.

Die Verschwenkvorrichtung 6 ist um einen Drehpunkt 9 verschwenkbar ausgebildet, insbesondere ist ein Verschwenken zwischen einer Kalibrier- und einer Messposition möglich, wie dies in den nachfolgenden Figuren dargestellt ist.

Die Verschwenkvorrichtung 6 kann an einem Unterwerkzeug 3 angeordnet sein, insbesondere ist eine Ausführung möglich, bei der das Unterwerkzeug 3 in einer Ausnehmung 10 des Unterwerkzeugs 3 angeordnet ist. Somit kann die Verschwenkvorrichtung außerhalb des Biegevorganges in diese Ausnehmung 10 zurückschwenken und ist somit vor einer Beschädigung während des Blecheinlegeablaufs geschützt.

Die Biegewinkel-Messvorrichtung 1 kann als eigenständiges Unterwerkzeug 3 ausgeführt sein und somit während des Rüstens der Biegepresse im Pressentisch angeordnet werden. Da Biegewerkzeuge zumeist massive metallische Komponenten sind, ist ferner auch möglich, dass die Biegewinkel-Messvorrichtung 1 mittels einer magnetischen Haltevorrichtung am Unter- 3 bzw. Oberwerkzeug 4 angeordnet wird. Dies hat den Vorteil, dass die gegenständliche Biegewinkel-Messvorrichtung 1 jederzeit bei einem bestehenden Werkzeugsatz einer Biegepresse verwendet werden kann.

Ebenso ist eine Anordnung der Verschwenkvorrichtung im Bereich des Oberwerkzeuges 4 möglich, wobei die hier beschriebenen Merkmale bei einer Anordnung im Bereich des Unterwerkzeuges 3, gleichbedeutend auf die Anordnung im Bereich des Oberwerkzeugs 4 umgelegt werden können.

In der Figur ist das zu biegende Blechteil 2 durchgezogen in seinem ungebogenen und strichliert in seinem gebogenen Zustand dargestellt. Im gebogenen Zustand bildet sich zwischen den aufgebogenen Blechschenkeln der Biegewinkel 11 aus.

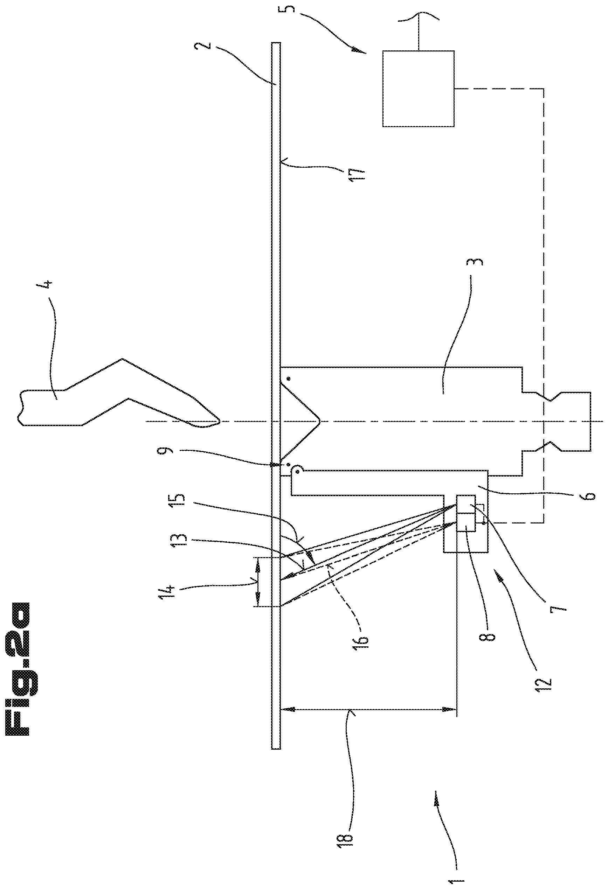

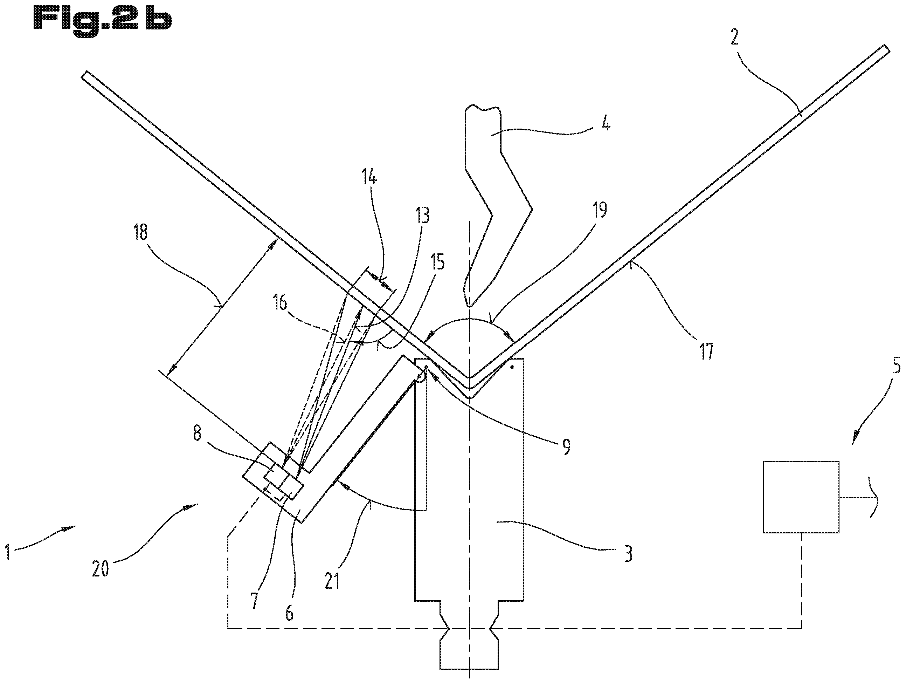

Die Fig. 2a und 2b zeigen die gegenständliche Biegewinkel-Messvorrichtung 1 in der Kalibrierposition vor Durchführung der Biegeumformung und in der Messposition während bzw. am Ende des Biegevorgangs.

Fig. 2a zeigt die Biegewinkel-Messvorrichtung 1 während der Kalibrierung, bei der die Verschwenkvorrichtung 6 in der Kalibrierposition 12 angeordnet ist. In der Figur ist eine gegebenenfalls vorhandene Ausnehmung im Unterwerkzeug 3 aus Vereinfachungsgründen nicht dargestellt. An der Verschwenkvorrichtung 6 ist eine Beleuchtungs- 7 und Detektionsvorrichtung 8 angeordnet. Von der Beleuchtungsvorrichtung 7 wird ein erster Lichtstrahl 13 in Richtung eines Oberflächenabschnitts 14 des umzuformenden Blechteils 2 abgegeben. Die Abgabe des Lichtstrahls erfolgt dabei derart, dass der erste Lichtstrahl 13 unter einem spitzen Einfallswinkel 15 auf den Oberflächenabschnitt 14 des Blechteils 2 auftrifft. Der einfallende erste Lichtstrahl 13 wird aufgrund der Oberflächenstruktur des Blechteils 2 reflektiert bzw. gestreut, wobei jedenfalls auch Anteile als reflektierter Lichtstrahl 16 zur Detektionsvorrichtung 8 gelangen. In dieser Beschreibung wird nur auf einen reflektierten Lichtstrahl Bezug genommen. Unter dem reflektierten Lichtstrahl werden jedoch alle Anteile verstanden, die vom Oberflächenabschnitt 14 in Richtung der Detektionsvorrichtung 8 zurück gelangen. Zur Vereinfachung der Darstellung und der Beschreibung wird vom einfallenden ersten Lichtstrahl 13 und vom reflektierten Lichtstrahl 16 gesprochen, wobei der Lichtstrahl eine Aufweitung aufweisen wird, wie dies in den Figuren dargestellt ist. Bevorzugt wird die Aufweitung jedoch so gering sein, dass der Oberflächenabschnitt 14 mit möglichst großer Intensität beleuchtet wird. Aufgrund der Reflexionseigenschaften der Blechoberfläche 17 im beleuchteten Oberflächenabschnitt 14 und der geometrischen Verhältnisse im Oberflächenabschnitt 14, insbesondere aufgrund des spitzen Einfallswinkels 15 und des Normalabstands 18, ist eine möglichst große Beleuchtungsstärke im Oberflächenabschnitt 14 von Vorteil, um auch beim reflektierten Lichtstrahl 16 eine ausreichende Intensität für die Detektion zur Verfügung zu haben. Bevorzugt wird die Beleuchtungsvorrichtung 7 bzw. ein Leuchtmittel der Beleuchtungsvorrichtung 7, sowie die Detektionsvorrichtung 8 bzw. ein Detektor der Detektionsvorrichtung 8, im Normalabstand 18 zur Blechoberfläche 17 um den Drehpunkt 9 verschwenkt, sodass die Hauptstrahlcharakteristik der Beleuchtungsvorrichtung 7 und die Empfindlichkeitscharakteristik der Detektionsvorrichtung 8 stets in Richtung des Oberflächenabschnitts 14 ausgerichtet sind. Diese Richtcharakteristik kann beispielsweise durch Strahllenkung- und/oder Strahlformungseinrichtungen, insbesondere Optiken, erreicht werden. Bevorzugt wird als Leuchtmittel der Beleuchtungsvorrichtung 7 eine Leuchtdiode verwendet, im Hinblick auf eine gute Richtwirkung und hohe Strahlintensität ist auch die Verwendung eines Lasers möglich.

In der in Fig. 2a dargestellten Kalibrierung befindet sich die Verschwenkvorrichtung 6 in der Kalibrierposition 12. Von der Beleuchtungsvorrichtung 7 wird der erste Lichtstrahl 13 auf den Oberflächenabschnitt 14 abgegeben, und gelangt als reflektierter Lichtstrahl 16 in die Detektionsvorrichtung 8. Von dieser Detektionsvorrichtung 8 wird die Intensität des reflektierten Lichtstrahls 16 in ein proportionales Signal, insbesondere elektrisches Signal, umgewandelt und an die Maschinensteuerung 5 übermittelt. Bei der Kalibrierung wird somit ein initialer Helligkeitswert bestimmt, der während des Biegevorgangs als Referenzwert herangezogen wird.

Fig. 2b zeigt die Situation während des Biegevorganges bzw. am Ende des Biegevorganges, bei Erreichung des geforderten Biegewinkels 19. Die Verschwenkvorrichtung 6 ist dabei in die Messposition 20 verschwenkt, wobei sowohl der Einfallswinkel 15 des ersten Lichtstrahls 13 auf den Oberflächenabschnitt 14, als auch der Normalabstand 18 zwischen Blechoberfläche 17 und Beleuchtungs- 7 und Detektionsvorrichtung 8 gleich ist, wie in der in Figur 2a dargestellten Kalibrierposition.

Die Bestimmung des korrekten Biegewinkels erfolgt nun dadurch, dass die Verschwenkvorrichtung 6 von der Kalibrier- 12 in die Messposition 20 verschwenkt wird und die Beleuchtungs- 7 und Detektionsvorrichtung 8 aktiviert werden. Zu Beginn des Biegevorgangs wird der von der Detektionsvorrichtung 8 erfasste Helligkeitswert deutlich von dem, während des Kalibriervorgangs erfassten Helligkeitswerts abweichen. Während des Biegevorgangs werden sich die beiden Blechschenkel aufbiegen, sodass sich die geometrischen Verhältnisse im Oberflächenabschnitt 14 jenen der Kalibrierposition annähern werden. Dementsprechend wird sich auch die erfasste Intensität des reflektierten Lichtstrahls 16 jener Intensität annähern, die bei der Kalibrierung erfasst wurde. In der Detektionsvorrichtung 8 und/oder in der Maschinensteuerung 5 ist nun eine Vergleichsschaltung angeordnet, welche die während der Kalibrierung erfasste Referenzhelligkeit mit der aktuellen, während des Biegevorgangs erfassten Intensität vergleicht. Solange zwischen den beiden Intensitäten ein Unterschied besteht, wird von der Maschinensteuerung 5 das aufeinander zubewegen des Biegewerkzeugs, insbesondere das weitere Eintauchen des Oberwerkzeuges 4 in das Unterwerkzeug 3, fortgesetzt. Bei Übereinstimmung der erfassten Helligkeitswerte wird der Biegevorgang gestoppt und das Biegewerkzeug geöffnet, also das Oberwerkzeug zurückgefahren. Gegebenenfalls kann vorgesehen sein, dass noch eine Nachdrückbiegung durchgeführt wird, um ein eventuelles Zurückfedern des gebogenen Bleches auszugleichen.

Bei übereinstimmenden Ist- und Soll-Helligkeitswerten des reflektierten Lichtstrahles 16 kann davon ausgegangen werden, dass zwischen der Beleuchtungs- 7 und Detektionsvorrichtung 8 und dem Oberflächenabschnitt 14 die selben geometrischen Verhältnisse herrschen, wie dies bei der Kalibrierung der Fall war. Durch die Art der Verschwenkbewegung der Verschwenkvorrichtung 6 um den Drehpunkt 9 ist ferner sichergestellt, dass auch der Normalabstand 18 gleich dem in der Kalibrierposition ist. In der Messposition 20 ist die Verschwenkvorrichtung 6 gegenüber der Kalibrierposition genau um den halben Biegewinkel 21 verschwenkt, was aufgrund der geometrischen Verhältnisse am Biegewerkzeug gewährleistet, dass das Blechteil 2 genau um den gewünschten Biegewinkel 19 gebogen wurde.

Nach einer Weiterbildung ist vorgesehen, dass die Verschwenkbewegung als Kreisbahn ausgebildet ist. Eine Kreisbahn stellt eine mögliche Bewegungsbahn dar, allgemein sind jedoch auch Bewegungsbahnen höherer Ordnung möglich, bevorzugt sind jedenfalls stetige Kurvenverläufe. Bei komplexeren Bewegungsbahnen kann es daher sein, dass während der Verschwenkung, der Normalabstand beliebige Werte annehmen kann. Wesentlich ist jedoch, dass der Normalabstand in der Kalibrier- und in der Messposition gleich ist.

Eine weitere mögliche Ausführung besteht darin, dass das Antriebsmittel, welches die Verschwenkvorrichtung 6 um den Drehpunkt 9 verschwenken kann, während der Durchführung des Biegevorgangs kontinuierlich angesteuert wird. Bei dieser Ausführung wird die Verschwenkvorrichtung 6 dem sich aufbiegenden Blechteil 2 derart nachgeführt, dass von der Detektionsvorrichtung 8 stets derselbe Helligkeitswert erfasst wird. Das Winkelmaß für die Auslenkung der Verschwenkvorrichtung 6 gegenüber der Ruhelage entspricht dann stets dem aktuellen halben Biegewinkel, sodass die Biegung solange durchgeführt wird, bis die Verschwenkvorrichtung um den gewünschten halben Biegewinkel 21 ausgelenkt ist.

Der Vorteil der gegenständlichen Biegewinkelmessvorrichtung liegt nun insbesondere darin, dass kontaktlos und individuell für jedes einzelne Blech während des Biegevorgangs eine genaue Bestimmung des aktuellen Biegewinkels möglich ist. Von Vorteil ist insbesondere auch, dass die Kalibrierung bzw. Messung automatisch erfolgen kann, ohne dass dazu eine Aktion des Benutzers erforderlich wäre. Der Kalibriervorgang kann beispielsweise mit Auslösen des Biegevorganges durchgeführt werden, wodurch es zu keiner Verzögerung des Biegevorganges kommt. Somit ist mit der gegenständlichen Biegewinkelmessvorrichtung eine Steigerung der Produktivität möglich, da die Gefahr eines fehlerhaft gebogenen Blechteils reduziert wird.

Abschließend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus der Biegewinkel-Messanordnung diese bzw. deren Bestandteile teilweise unmaßstäblich und/oder vergrößert und/oder verkleinert dargestellt wurden.

### Bezugszeichenaufstellung

- 1: Biegewinkel-Messvorrichtung
- 2: Blechteil
- 3: Unterwerkzeug
- 4: Oberwerkzeug
- 5: Maschinensteuerung
- 6: Verschwenkvorrichtung
- 7: Beleuchtungsvorrichtung
- 8: Detektionsvorrichtung
- 9: Drehpunkt
- 10: Ausnehmung
- 11: Biegewinkel
- 12: Kalibrierposition
- 13: Erster Lichtstrahl
- 14: Oberflächenabschnitt
- 15: Einfallswinkel
- 16: Reflektierter Lichtstrahl
- 17: Blechoberfläche
- 18: Normalabstand
- 19: Biegewinkel
- 20: Messposition
- 21: halber Biegewinkel

## Patentansprüche

1. Biegewinkel-Messvorrichtung (1) für eine Biegepresse,
bei der zur Durchführung einer Biegeumformung ein zu biegendes Blechteil (2) zwischen einem Unter- (3) und einem Oberwerkzeug (4) eines Biegewerkzeugs der Biegepresse angeordnet ist,
- wobei die Biegewinkel-Messvorrichtung (1) eine Beleuchtungs- (7) und Detektionsvorrichtung (8) aufweist, welche an einer Verschwenkvorrichtung (6) angeordnet sind,
- wobei die Beleuchtungsvorrichtung (7) zur Abgabe eines ersten Lichtstrahls (13) auf einen Oberflächenabschnitt (14) des Blechteils (2) ausgebildet ist,
- und wobei die Detektionsvorrichtung (8) zur Erfassung eines vom Oberflächenabschnitt (14) reflektierten Lichtstrahls (16) angeordnet ist,
- wobei die Detektionsvorrichtung (8) über ein Auswertemodul mit einer Maschinensteuerung (5) verbunden ist,
- **dadurch gekennzeichnet, dass** die Verschwenkvorrichtung (6) zwischen einer Kalibrier- (12) und einer Messposition (20) verschwenkbar ausgebildet ist,
- so dass in der Kalibrierposition (12) bzw. in der Messposition (20) der Verschwenkvorrichtung (6) die Beleuchtungs- (7) und Detektionsvorrichtung (8) in einem Normalabstand (18) zu einer Oberfläche des im Biegewerkzeug eingelegten Blechteils (2), in seinem ungebogenen Zustand bzw. in seinem gebogenen Zustand, angeordnet ist,
- und dass in der Kalibrierposition (12) bzw. in der Messposition (20) der Verschwenkvorrichtung (6) der erste Lichtstrahl (13) derart ausgerichtet ist, dass er unter einem spitzen Einfallswinkel (15) auf die Oberfläche des Blechteils (2), sowohl in seinem ungebogenen Zustand als auch in seinem gebogenen Zustand, trifft,
- wobei der Einfallswinkel (15) und der Normalabstand (18) in der Kalibrier- (12) und Messposition (20) der Verschwenkvorrichtung (6) gleich ist,
- und die Verschwenkvorrichtung (6) um eine Biegekante eines der Biegewerkzeuge, dem Unter- (3) oder dem Oberwerkzeug (4), schwenkbar gelagert ist.

2. Biegewinkel-Messvorrichtung nach Anspruch 1, **dadurch gekennzeichnet, dass** die Verschwenkvorrichtung (6) um einen Kantenkrümmungsmittelpunkt der Biegekante des Unterwerkzeugs (4) schwenkbar gelagert ist.

3. Biegewinkel-Messvorrichtung nach Anspruch 1 oder 2, **dadurch gekennzeichnet, dass** die Verschwenkvorrichtung (6) durch einen, um einen Drehpunkt verschwenkbaren Ausleger gebildet ist.

4. Biegewinkel-Messvorrichtung nach Anspruch 1 bis 3, **dadurch gekennzeichnet, dass** die Beleuchtungsvorrichtung (7) als Punktstrahler und/oder dass die Detektionsvorrichtung (8) als Bildsensor ausgebildet ist.

5. Biegewinkel-Messvorrichtung nach einem der Ansprüche 1 bis 4, **dadurch gekennzeichnet, dass** die Verschwenkvorrichtung (6) ein Antriebsmittel aufweist, welches mit der Maschinensteuerung (5) verbunden ist.

6. Biegewinkel-Messvorrichtung nach einem der Ansprüche 1 bis 5, **dadurch gekennzeichnet, dass** die Verschwenkvorrichtung (6) im Bereich des Unter- (3) oder des Oberwerkzeugs (4) angeordnet ist.

7. Biegewinkel-Messvorrichtung nach einem der Ansprüche 1 bis 6, **dadurch gekennzeichnet, dass** in der Draufsicht entsprechend einer Richtung der Biegekante, die Bewegungsbahn der Verschwenkvorrichtung (6), zwischen einer Kalibrier- (12) und einer Messposition (20), eine Kreisbahn ist.

8. Biegewinkel-Messvorrichtung nach einem der Ansprüche 1 bis 7, **dadurch gekennzeichnet, dass** die Beleuchtungsvorrichtung (7) einen Modulator aufweist, mit dem der erste Lichtstrahl (13) in seiner Intensität modulierbar ist.

9. Biegewinkel-Messvorrichtung nach Anspruch 8, **dadurch gekennzeichnet**, die Detektionsvorrichtung (8) oder die Maschinensteuerung (5) einen Korrelator aufweist.

10. Biegewinkel-Messvorrichtung nach einem der Ansprüche 1 bis 9, **dadurch gekennzeichnet, dass** der erste Lichtstrahl (13) eine strukturierte Helligkeitsverteilung aufweist.

11. Biegewinkel-Messvorrichtung nach einem der Ansprüche 1 bis 10, **dadurch gekennzeichnet, dass** die Detektionsvorrichtung (8) eine gerichtete Empfindlichkeitscharakteristik aufweist.

12. Biegewinkel-Messvorrichtung nach einem der Ansprüche 1 bis 11, **dadurch gekennzeichnet, dass** die Detektionsvorrichtung (8) ein Empfindlichkeitsmaximum im Spektralbereich des ersten Lichtstrahls (13) aufweist.

13. Biegewinkel-Messvorrichtung nach einem der Ansprüche 1 bis 12, **dadurch gekennzeichnet, dass** die Verschwenkvorrichtung (6) in eine Ausnehmung (10) des Unterwerkzeugs (3) hinein schwenkbar ist.

14. Verfahren zur Bestimmung des Biegewinkels eines Blechteils (2) während der Durchführung der Biegeumformung, mit einer Biegewinkel-Messvorrichtung (1) nach einem der Ansprüche 1 bis 13,
wobei das umzuformende Blechteil (2) im Biegewerkzeug, insbesondere zwischen dem Unter- (3) und Oberwerkzeug (4), eingelegt wird,
und die Biegeumformung durch ein aufeinander Zubewegen des Ober- (4) und Unterwerkzeugs (3) durchgeführt wird,
**dadurch gekennzeichnet, dass**
nach Einlegen des zu biegenden Blechteils (2) und vor Durchführung der Biegeumformung:
• die Beleuchtungs- (7) und Detektionsvorrichtung (8) von der Verschwenkvorrichtung (6) in eine Kalibrierposition (12) verschwenkt wird;
• von der Beleuchtungsvorrichtung (7) ein erster Lichtstrahl (13) unter einem spitzen Einfallswinkel (15) auf einen Oberflächenabschnitt (14) des Blechteils (2) abgegeben wird;
• der vom Oberflächenabschnitt (14) reflektierte Lichtstrahl (16) von der Detektionsvorrichtung (8) aufgenommen und die erfasste Intensität vom Auswertemodul als Soll-Intensität bestimmt wird;
• die Beleuchtungs- (7) und Detektionsvorrichtung (8) von der Verschwenkvorrichtung (6) in eine Messposition (20) verschwenkt wird;
von der Maschinensteuerung (5) die aufeinander Zubewegung des Ober- (4) und Unterwerkzeugs (3) ausgelöst wird und währenddessen:
• der vom Oberflächenabschnitt (14) reflektierte Lichtstrahl (16) von der Detektionsvorrichtung (8) aufgenommen und die erfasste Intensität vom Auswertemodul als Ist-Intensität bestimmt wird;
• vom Auswertemodul oder der Maschinensteuerung (5) ein Vergleich der Ist- mit der Soll-Intensität durchgeführt wird;
• bei einer Übereinstimmung der Ist-Intensität mit der Soll-Intensität, das aufeinander Zubewegen des Ober- (4) und Unterwerkzeugs (3) von der Maschinensteuerung (5) gestoppt wird,
wobei ein Normalabstand (18) zwischen einer Blechoberfläche (17) und der Beleuchtungs-(7) und Detektionsvorrichtung (8) in der Messposition (20) gleich ist einem solchen Normalabstand (18) in der Kalibrierposition (12).

15. Verfahren zur Bestimmung des Biegewinkels eines Blechteils (2) während der Durchführung der Biegeumformung, mit einer Biegewinkel-Messvorrichtung (1) nach einem der Ansprüche 1 bis 13,
wobei das umzuformende Blechteil (2) im Biegewerkzeug, insbesondere zwischen dem Unter- (3) und Oberwerkzeug (4), eingelegt wird,
und die Biegeumformung durch ein aufeinander Zubewegen des Ober- (4) und Unterwerkzeugs (3) durchgeführt wird,
**dadurch gekennzeichnet, dass**
nach Einlegen des zu biegenden Blechteils (2) und vor Durchführung der Biegeumformung:
• die Beleuchtungs- (7) und Detektionsvorrichtung (8) von der Verschwenkvorrichtung (6) in eine Kalibrierposition (12) verschwenkt wird;
• von der Beleuchtungsvorrichtung (7) ein erster Lichtstrahl (13) unter einem spitzen Einfallswinkel (15) auf einen Oberflächenabschnitt (14) des Blechteils (2) abgegeben wird;
• der vom Oberflächenabschnitt (14) reflektierte Lichtstrahl (16) von der Detektionsvorrichtung (8) aufgenommen und die erfasste Intensität vom Auswertemodul als Soll-Intensität bestimmt wird;
von der Maschinensteuerung (5) die aufeinander Zubewegung des Ober- (4) und Unterwerkzeugs (3) ausgelöst wird und währenddessen:
• der vom Oberflächenabschnitt (14) reflektierte Lichtstrahl (16) von der Detektionsvorrichtung (8) aufgenommen und die erfasste Intensität vom Auswertemodul als Ist-Intensität bestimmt wird;
• vom Auswertemodul oder der Maschinensteuerung (5) ein Vergleich der Ist- mit der Soll-Intensität durchgeführt wird;
• die Verschwenkvorrichtung (6) dem sich aufbiegenden Blechteil (2) derart nachgeführt wird, dass von der Detektionsvorrichtung (8) stets die Soll-Intensität erfasst wird;
und bei einer Übereinstimmung des Winkels der Auslenkung der Verschwenkvorrichtung (6) gegenüber der Kalibrierposition (12) mit einem gewünschten halben Biegewinkel (21) das aufeinander Zubewegen des Ober- (4) und Unterwerkzeugs (3) von der Maschinensteuerung (5) gestoppt wird.

## Claims

1. A bend angle measuring device (1) for a press brake, in which in order to perform a bending action, a sheet metal part (2) to be bent is arranged between a lower tool (3) and an upper tool (4) of a bending tool of the press brake,
- wherein the bend angle measuring device (1) has a lighting device (7) and detection device (8) which are arranged on a pivoting device (6),
- wherein the lighting device (7) is designed to emit a first light beam (13) onto a surface portion (14) of the sheet metal part (2)
- and wherein the detection device (8) is arranged to detect a light beam (16) reflected by the surface portion (14),
- wherein the detection device (8) is connected via an evaluation module to a machine control system (5),
- **characterized in that** the pivoting device (6) is pivotably configured between a calibrating position (12) and a measuring position (20),
- so that in the calibrating position (12) or in the measuring position (20) of the pivoting device (6), the lighting device (7) and detection device (8) is arranged at a standard interval (18) from a surface of the sheet metal part (2) inserted in the bending tool, in its unbent state or in its bent state,
- and that in the calibrating position (12) or in the measuring position (20) of the pivoting device (6), the first light beam (13) is oriented in such a manner that it meets the surface of the sheet metal part (2), both in its unbent state and also in its bent state, at an acute angle of incidence (15),
- wherein the angle of incidence (15) and the standard interval (18) in the calibrating position (12) and the measuring position (20) of the pivoting device (6) is the same
- and the pivoting device (6) is mounted pivotably about a bending edge of one of the bending tools, the lower tool (3) or the upper tool (4).

2. The bend angle measuring device according to claim 1, **characterized in that** the pivoting device (6) is pivotably mounted about an edge curvature centre point of the bending edge of the lower tool (4).

3. The bend angle measuring device according to claim 1 or 2, **characterized in that** the pivoting device (6) is formed by an extension arm pivotable about a pivot point.

4. The bend angle measuring device according to claim 1 to 3, **characterized in that** the lighting device (7) is configured as a spotlight and/or that the detection device (8) is configured as an image sensor.

5. The bend angle measuring device according to one of claims 1 to 4, **characterized in that** the pivoting device (6) has a drive means which is connected to the machine control system (5).

6. The bend angle measuring device according to one of claims 1 to 5, **characterized in that** the pivoting device (6) is arranged in the region of the lower tool (3) or of the upper tool (4).

7. The bend angle measuring device according to one of claims 1 to 6, **characterized in that** in the plan view corresponding to a direction of the bending edge, the movement path of the pivoting device (6) is a circular path between a calibrating position (12) and a measuring position (20).

8. The bend angle measuring device according to one of claims 1 to 7, **characterized in that** the lighting device (7) has a modulator with which the first light beam (13) can have its intensity modulated.

9. The bend angle measuring device according to claim 8, **characterized in that** the detection device (8) or the machine control system (5) has a correlator.

10. The bend angle measuring device according to one of claims 1 to 9, **characterized in that** the first light beam (13) has a structured brightness distribution.

11. The bend angle measuring device according to one of claims 1 to 10, **characterized in that** the detection device (8) has a directed sensitivity characteristic.

12. The bend angle measuring device according to one of claims 1 to 11, **characterized in that** the detection device (8) has a maximum sensitivity in the spectral range of the first light beam (13).

13. The bend angle measuring device according to one of claims 1 to 12, **characterized in that** the pivoting device (6) can be pivoted into a recess (10) in the lower tool (3).

14. A method of determining the bend angle of a sheet metal part (2) while the bending action is being carried out, having a bend angle measuring device (1) according to one of claims 1 to 13,
wherein the sheet metal part (2) to be formed is inserted in the bending tool, in particular between the lower tool (3) and the upper tool (4),
and the bending action is carried out by moving the upper tool (4) and the lower tool (3) towards one another,
**characterized in that**
once the sheet metal part (2) to be bent has been inserted and before the bending action has been carried out:
• the lighting device (7) and the detection device (8) are pivoted by the pivoting device (6) into a calibrating position (12);
• a first light beam (13) is emitted by the lighting device (7) at an acute angle of incidence (15) to a surface portion (14) of the sheet metal part (2);
• the light beam (16) reflected by the surface portion (14) is received by the detection device (8) and the detected intensity is determined by the evaluation module as the target intensity;
• the lighting device (7) and detection device (8) is pivoted by the pivoting device (6) into a measuring position (20);
the movement of the upper tool (4) and the lower tool (3) towards one another is triggered by the machine control system (5) and during this:
• the light beam (16) reflected by the surface portion (14) is received by the detection device (8) and the detected intensity is determined by the evaluation module as the actual intensity;
• a comparison between the actual intensity and the target intensity is carried out by the evaluation module or the machine control system (5);
• if the actual intensity and the target intensity agree, the movement of the upper tool (4) and the tool (3) towards one another is halted by the machine control system (5),
wherein a standard interval (18) between a sheet metal surface (17) and the lighting device (7) and detection device (8) in the measuring position (20) is equal to a standard interval (18) of this kind in the calibrating position (12).

15. A method of determining the bend angle of a sheet metal part (2) while the bending action is being carried out, having a bend angle measuring device (1) according to one of claims 1 to 13,
wherein the sheet metal part (2) to be formed is inserted in the bending tool, in particular between the tool (3) and the upper tool (4),
and the bending action is carried out by moving the upper tool (4) and the lower tool (3) towards one another,
**characterized in that**
once the sheet metal part (2) to be bent has been inserted and before the bending action has been carried out:
• the lighting device (7) and the detection device (8) are pivoted by the pivoting device (6) into a calibrating position (12);
• a first light beam (13) is emitted by the lighting device (7) at an acute angle of incidence (15) to a surface portion (14) of the sheet metal part (2);
• the light beam (16) reflected by the surface portion (14) is received by the detection device (8) and the detected intensity is determined by the evaluation module as the target intensity;
the movement of the upper tool (4) and the lower tool (3) towards one another is triggered by the machine control system (5) and during this:
• the light beam (16) reflected by the surface portion (14) is received by the detection device (8) and the detected intensity is determined by the evaluation module as the actual intensity;
• a comparison between the actual intensity and the target intensity is carried out by the evaluation module or the machine control system (5);
• the pivoting device (6) tracks the sheet metal part (2) being bent open in such a manner that the target intensity is always detected by the detection device (8);
and when the angle of deflection of the pivoting device (6) with respect to the calibration position (12) and a desired half bend angle (21) agree, the movement of the upper tool (4) and the lower tool (3) towards one another is halted by the machine control system (5).

## Revendications

1. Dispositif de mesure d'angle de pliage (1) pour une presse plieuse,
dans lequel, pour la réalisation d'un cintrage, une pièce de tôle (2) à plier est disposée entre un outil inférieur (3) et un outil supérieur (4) d'un outil de pliage de la presse plieuse,
- le dispositif de mesure d'angle de pliage (1) comprenant un dispositif d'éclairage (7) et un dispositif de détection (8), qui sont disposés sur un dispositif de pivotement (6),
- le dispositif d'éclairage (7) étant conçu pour l'émission d'un premier faisceau lumineux (13) sur une portion de surface (14) de la pièce de tôle (2),
- et le dispositif de détection (8) étant disposé pour la mesure d'un faisceau lumineux (16) réfléchi par la portion de surface (14),
- le dispositif de détection (8) étant relié par l'intermédiaire d'un module d'analyse à une commande de la machine (5),
- **caractérisé en ce que** le dispositif de pivotement (6) est conçu de manière pivotante entre une position de calibrage (12) et une position de mesure (20),
- de façon à ce que, dans la position de calibrage (12) ou dans la position de mesure (20) du dispositif de pivotement (6), le dispositif d'éclairage (7) et le dispositif de détection (8) sont disposés à une distance normale (18) par rapport à une surface de la pièce de tôle (2) insérée dans l'outil de pliage, dans son état non plié ou dans son état plié,
- et **en ce que**, dans la position de calibrage (12) ou dans la position de mesure (20) du dispositif de pivotement (6), le premier faisceau lumineux (13) est orienté de façon à ce qu'il arrive avec un angle d'incidence aigu (15) sur la surface de la pièce de tôle (2),
aussi bien dans son état non plié que dans son état plié,
- l'angle d'incidence (15) et la distance normale (18) étant identiques dans la position de calibrage (12) et la position de mesure (20) du dispositif de pivotement (6),
- et le dispositif de pivotement (6) étant logé de manière pivotante autour d'une arête de pliage d'un des outils de pliage, l'outil inférieur (3) ou l'outil supérieur (4).

2. Dispositif de mesure d'angle de pliage selon la revendication 1, **caractérisé en ce que** le dispositif de pivotement (6) est logé de manière pivotante autour d'un centre de courbure d'arête de l'arête de pliage de l'outil inférieur (4).

3. Dispositif de mesure d'angle de pliage selon la revendication 1 ou 2, **caractérisé en ce que** le dispositif de pivotement (6) est constitué d'une flèche pivotant autour d'un centre de rotation.

4. Dispositif de mesure d'angle de pliage selon la revendication 1 à 3, **caractérisé en ce que** le dispositif d'éclairage (7) est conçu comme un projecteur ponctuel et/ou **en ce que** le dispositif de détection (8) est conçu comme un capteur d'image.

5. Dispositif de mesure d'angle de pliage selon l'une des revendications 1 à 4, **caractérisé en ce que** le dispositif de pivotement (6) comprend un moyen d'entraînement qui est relié avec la commande de la machine (5).

6. Dispositif de mesure d'angle de pliage selon l'une des revendications 1 à 5, **caractérisé en ce que** le dispositif de pivotement (6) est disposé au niveau de l'outil inférieur (3) ou de l'outil supérieur (4).

7. Dispositif de mesure d'angle de pliage selon l'une des revendications 1 à 6, **caractérisé en ce que**, dans la vue de dessus correspondant à une direction de l'arête de pliage, la trajectoire du dispositif de pivotement (6) entre une position de calibrage (12) et une position de mesure (20) est une trajectoire circulaire.

8. Dispositif de mesure d'angle de pliage selon l'une des revendications 1 à 7, **caractérisé en ce que** le dispositif d'éclairage (7) comprend un modulateur avec lequel le premier faisceau lumineux (13) peut être modulé en intensité.

9. Dispositif de mesure d'angle de pliage selon la revendication 8, **caractérisé en ce que** le dispositif de détection (8) ou la commande de la machine (5) comprend un corrélateur.

10. Dispositif de mesure d'angle de pliage selon l'une des revendications 1 à 9, **caractérisé en ce que** le premier faisceau lumineux (13) comprend une répartition de luminosité structurée.

11. Dispositif de mesure d'angle de pliage selon l'une des revendications 1 à 10, **caractérisé en ce que** le dispositif de détection (8) présente une caractéristique de sensibilité directionnelle.

12. Dispositif de mesure d'angle de pliage selon l'une des revendications 1 à 11, **caractérisé en ce que** le dispositif de détection (8) présente un maximum de sensibilité dans le domaine spectral du premier faisceau lumineux (13).

13. Dispositif de mesure d'angle de pliage selon l'une des revendications 1 à 12, **caractérisé en ce que** le dispositif de pivotement (6) est pivotant vers un évidement (10) de l'outil inférieur (3).

14. Procédé de détermination de l'angle de pliage d'une pièce de tôle (2) pendant la réalisation du cintrage, avec un dispositif de mesure d'angle de pliage (1) selon l'une des revendications 1 à 13,
la pièce de tôle à cintrer (2) étant insérée dans l'outil de pliage, plus particulièrement entre l'outil inférieur (3) et l'outil supérieur (4),
et le cintrage étant réalisé par un mouvement de l'outil supérieur (4) et de l'outil inférieur (3) l'un vers l'autre,
**caractérisé en ce que**
après l'insertion de la pièce de tôle à plier (2) et avant la réalisation du cintrage:
• le dispositif d'éclairage (7) et le dispositif de détection (8) sont pivotés par le dispositif de pivotement (6) vers une position de calibrage (12) ;
• un premier faisceau lumineux (13) est émis par le dispositif d'éclairage (7) avec un angle d'incidence aigu (15) sur une portion de surface (14) de la pièce de tôle (2) ;
• le faisceau lumineux (16) réfléchi par la portion de surface (14) est absorbé par le dispositif de détection (8) et l'intensité mesurée est déterminée par le module d'analyse comme l'intensité de consigne ;
• le dispositif d'éclairage (7) et le dispositif de détection (8) sont pivotés par le dispositif de pivotement (6) vers une position de mesure (20) ;
le mouvement de l'outil supérieur (4) et de l'outil inférieur (3) l'un vers l'autre est déclenché par la commande de la machine (5), et pendant ce temps :
• le faisceau lumineux (16) réfléchi par la portion de surface (14) est absorbé par le dispositif de détection (8) et l'intensité mesurée est déterminée par le module d'analyse comme l'intensité effective ;
• une comparaison entre l'intensité effective et l'intensité de consigne est effectuée par le module d'analyse ou par la commande de la machine (5) ;
• lorsque l'intensité effective correspond à l'intensité de consigne, le mouvement de l'outil supérieur (4) et de l'outil inférieur (3) l'un vers l'autre est arrêté par la commande de la machine (5),
une distance normale (18) entre une surface de tôle (17) et le dispositif d'éclairage (7) et le dispositif de détection (8) dans la position de mesure (20) étant identiques à une distance normale (18) dans la position de calibrage (12).

15. Procédé de détermination de l'angle de pliage d'une pièce de tôle (2) pendant la réalisation du cintrage, avec un dispositif de mesure d'angle de pliage (1) selon l'une des revendications 1 à 13,
la pièce de tôle à cintrer (2) étant insérée dans l'outil de pliage, plus particulièrement entre l'outil inférieur (3) et l'outil supérieur (4),
et le cintrage étant réalisé par un mouvement de l'outil supérieur (4) et de l'outil inférieur (3) l'un vers l'autre,
**caractérisé en ce que**
après l'insertion de la pièce de tôle à plier (2) et avant la réalisation du cintrage:
• le dispositif d'éclairage (7) et le dispositif de détection (8) sont pivotés par le dispositif de pivotement (6) vers une position de calibrage (12) ;
• un premier faisceau lumineux (13) est émis par le dispositif d'éclairage (7) avec un angle d'incidence aigu (15) sur une portion de surface (14) de la pièce de tôle (2) ;
• le faisceau lumineux (16) réfléchi par la portion de surface (14) est absorbé par le dispositif de détection (8) et l'intensité mesurée est déterminée par le module d'analyse comme l'intensité de consigne ;
le mouvement de l'outil supérieur (4) et de l'outil inférieur (3) l'un vers l'autre est déclenché par la commande de la machine (5) et pendant ce temps :
• le faisceau lumineux (16) réfléchi par la portion de surface (14) est absorbé par le dispositif de détection (8) et l'intensité mesurée est déterminée par le module d'analyse comme l'intensité effective ;
• une comparaison entre l'intensité effective et l'intensité de consigne est effectuée par le module d'analyse ou par la commande de la machine (5) ;
• le dispositif de pivotement (6) suit la pièce de tôle à plier (2) de façon à ce que l'intensité de consigne soit toujours mesurée par le dispositif de détection (8) ;
lorsque l'angle de déviation du dispositif de pivotement (6) par rapport à la position de calibrage (12) correspond à un demi-angle de pliage (21) souhaité, le mouvement de l'outil supérieur (4) et de l'outil inférieur (3) l'un vers l'autre est arrêté par la commande de la machine (5).
